# EUROPEAN PATENT APPLICATION

(11) **EP 4 506 195 A1**
(43) Date of publication of application: **12.02.2025**
(21) Application number: 22936062.3
(22) Date of filing: 04.04.2022
(51) Int. Cl.: B60K 1/00

(54) **DRIVING UNIT FOR ELECTRIC VEHICLE**

(71) Applicant: NISSAN MOTOR CO., LTD., Kanagawa 221-0023 (JP)
(72) Inventor: KURITA, Takashi, Atsugi-shi, Kanagawa 243-0123 (JP)
(74) Representative: Hoefer & Partner Patentanwälte mbB
(86) International application number: PCT/JP2022/017067
(87) International publication number: WO 2023/195054

(57) **Abstract**

A drive unit for an electric vehicle, comprising a drive unit including a rotary electric machine disposed in a motor room of the electric vehicle and an inverter unit electrically connected to the rotary electric machine and a mount bracket configured to support the drive unit in the motor room, is provided. The rotary electric machine includes a motor housing. The inverter unit is placed on an upper surface of the motor housing and fixed to the motor housing at a fixing point disposed at an outer edge portion of the inverter unit. The motor housing includes an upright wall that is upright above the motor housing on an outer side of the fixing point of the inverter unit in a vehicle width direction. One end of the mount bracket is fixed to an upper surface of the upright wall.

## Description

### TECHNICAL FIELD

The present invention relates to a drive unit for an electric vehicle.

### BACKGROUND ART

An electric vehicle travels by an inverter device converting DC power of a battery into AC power, supplying the AC power to a drive motor, and driving the drive motor.

JP2019-188884A discloses a configuration in which a driving unit in which a traction motor (drive motor) and an inverter are integrated is attached to a side member and an under member via a mount.

### SUMMARY OF INVENTION

### PROBLEM TO BE SOLVED BY THE INVENTION

In such an electric vehicle, when a large load is input from the front of the vehicle at the time of a collision or the like, the side member is deformed and interferes with an inverter unit, and a problem may occur in insulation property. The technique described in the above-described patent literature discloses that a load is dispersed to the side member and the under member at the time of an offset collision, but does not disclose a countermeasure in a case where the side member is deformed and interferes with the inverter unit.

In view of such a problem, an object of the present invention is to provide a drive unit for an electric vehicle that can suppress occurrence of a problem in insulation property of an inverter unit even when a large load is input.

### MEANS FOR SOLVING THE PROBLEM

An embodiment of the present invention is applied to a drive unit for an electric vehicle. A drive unit including a rotary electric machine disposed in a motor room of the electric vehicle and an inverter unit electrically connected to the rotary electric machine, and a mount bracket configured to support the drive unit in the motor room are provided. The rotary electric machine includes a motor housing, and the inverter unit is placed on an upper surface of the motor housing and fixed to the motor housing at a fixing point disposed at an outer edge portion of the inverter unit. The motor housing includes an upright wall that is upright above the motor housing on an outer side of the fixing point of the inverter unit in a vehicle width direction, and one end of the mount bracket is fixed to an upper surface of the upright wall.

### EFFECT OF THE INVENTION

According to the present invention, an upright wall is provided on an outer side of a fixing point of an inverter unit in a vehicle width direction, and a mount bracket is provided at an upper portion of the upright wall. Accordingly, when a large load is input at the time of collision or the like, components of a motor room fastened to the mount bracket on an outer side of a drive unit are prevented from directly interfering with the inverter unit from the outer side in the vehicle width direction, and it is possible to suppress occurrence of a problem in the insulation property of the inverter unit.

### BRIEF DESCRIPTION OF DRAWINGS

[FIG. 1] FIG. 1 is a view of a motor room of an electric vehicle according to the present embodiment from above.
[FIG. 2] FIG. 2 is a view of a drive unit from the front of the electric vehicle.
[FIG. 3] FIG. 3 is a view mainly illustrating a mount bracket.
[FIG. 4] FIG. 4 is a perspective view mainly illustrating the mount bracket.
[FIG. 5] FIG. 5 is a view of the motor room from a left side.
[FIG. 6] FIG. 6 is a view of the drive unit from the left side.
[FIG. 7] FIG. 7 is a sectional view of the drive unit.

### DESCRIPTION OF EMBODIMENTS

Hereinafter, embodiments of the present invention will be described with reference to the accompanied drawings.

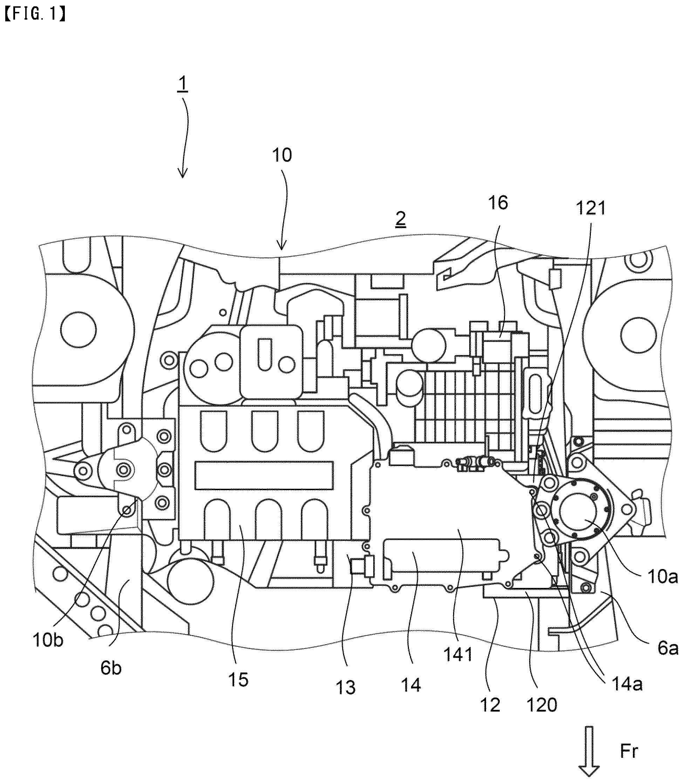

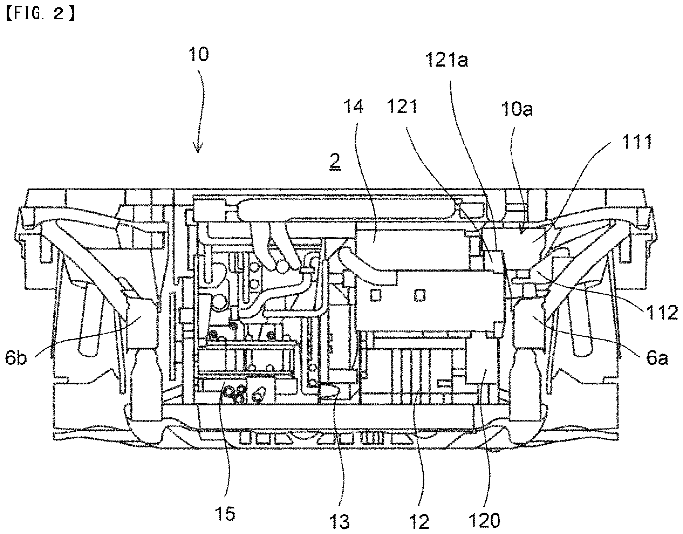

FIG. 1 is a view illustrating a drive unit 10 of an electric vehicle 1 according to the present embodiment, and is a view of a motor room 2 of the electric vehicle 1 from above the electric vehicle 1. FIG. 2 is a view, from the front, of the motor room 2 in which the drive unit 10 is disposed. In the following description, "right" and "left" indicate right and left in a vehicle width direction when the vehicle moves forward.

As illustrated in FIG. 1, the drive unit 10 is mounted in the motor room 2 of the electric vehicle 1, and is supported in the motor room 2 by mount brackets 10a and 10b disposed to the left and right of the drive unit 10. The drive unit 10 includes a first rotary electric machine 12, a transmission 13, an inverter unit 14, an engine 15, and a second rotary electric machine 16. The drive unit 10 is, for example, a drive device of a series hybrid vehicle.

As illustrated in FIG. 2, in the drive unit 10, the transmission 13 is sandwiched between the engine 15 and the first rotary electric machine 12, the inverter unit 14 is disposed above the first rotary electric machine 12, and the second rotary electric machine 16 is fixed to the transmission 13 in a state of being disposed on a vehicle rear side of the first rotary electric machine 12. The drive unit 10 is implemented by integrating the above configurations.

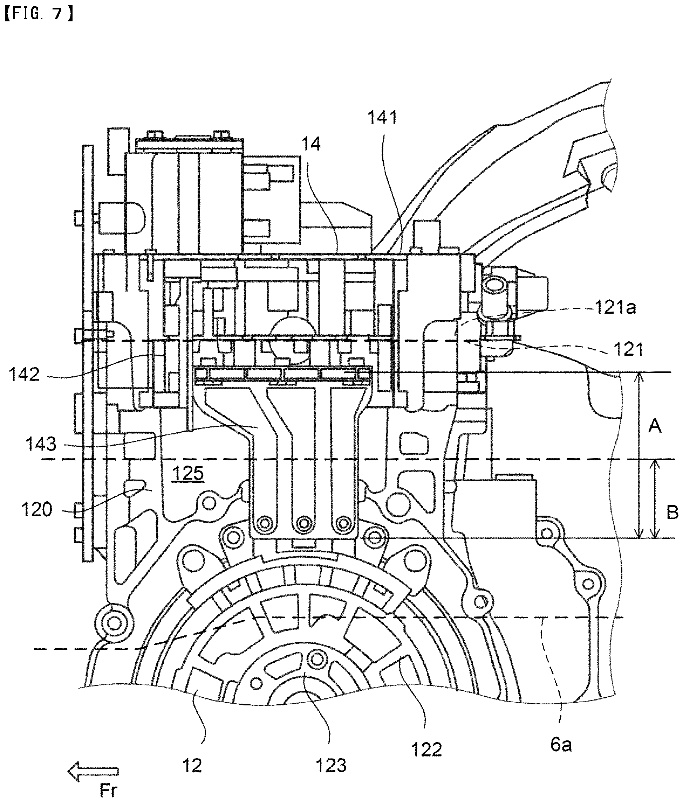

The first rotary electric machine 12 is electrically connected to the inverter unit 14, is driven by a driving force of the engine 15 to generate electric power, and functions as a generator that outputs the generated electric power to the inverter unit 14. The first rotary electric machine 12 also functions as a motor that is driven by the electric power supplied from the inverter unit 14. As will be described later with reference to FIG. 7, the first rotary electric machine 12 includes a stator 122 and a rotor 123 that are accommodated in a motor housing 120.

As illustrated in FIG. 1, the inverter unit 14 converts DC power supplied from a battery (not illustrated) into AC power suitable for driving the first rotary electric machine 12, and supplies the AC power to the first rotary electric machine 12. The inverter unit 14 converts the electric power generated by the first rotary electric machine 12 into DC power suitable for charging the battery, and charges the battery. As will be described later with reference to FIG. 7, the inverter unit 14 is configured such that a heavy electric component 142 such as a power module is accommodated in an inverter housing 141.

The engine 15 drives the first rotary electric machine 12 via the transmission 13 to cause the first rotary electric machine 12 to generate electric power. The transmission 13 is, for example, a speed-up gear, and speeds up rotation of the engine 15 and transmits the rotation to the first rotary electric machine 12.

The second rotary electric machine 16 is electrically connected to the inverter unit 14, and functions as a motor by being driven by AC power supplied from the inverter unit 14. An axle and a drive wheel are connected to the second rotary electric machine 16, and the electric vehicle 1 travels by being driven by the second rotary electric machine 16. The second rotary electric machine 16 also functions as a generator that generates (regenerates) electric power during deceleration of the vehicle and outputs the generated electric power to the inverter unit 14.

A pair of left and right side members 6 (6a and 6b) is disposed in the motor room 2 along a front-rear direction of the vehicle. The drive unit 10 is disposed between the side members 6a and 6b, and is supported by the side members 6a and 6b via the mount brackets 10a and 10b disposed to the left and right of the drive unit 10.

The inverter unit 14 is placed on an upper surface of the first rotary electric machine 12 of the drive unit 10. The inverter unit 14 has a plurality of fixing points 14a at an outer edge portion of the inverter housing 141, and is fixed to the motor housing 120 of the first rotary electric machine 12 at the fixing points 14a via fastening members such as bolts.

An upright wall 121 that is upright above the motor housing 120 is formed on an outer side of the fixing points 14a of the inverter unit 14 in the vehicle width direction (to left of inverter unit 14) on the upper surface of the motor housing 120. The mount bracket 10a is fastened to the upright wall 121.

Next, a mounting structure of the drive unit 10 in the motor room 2 will be described.

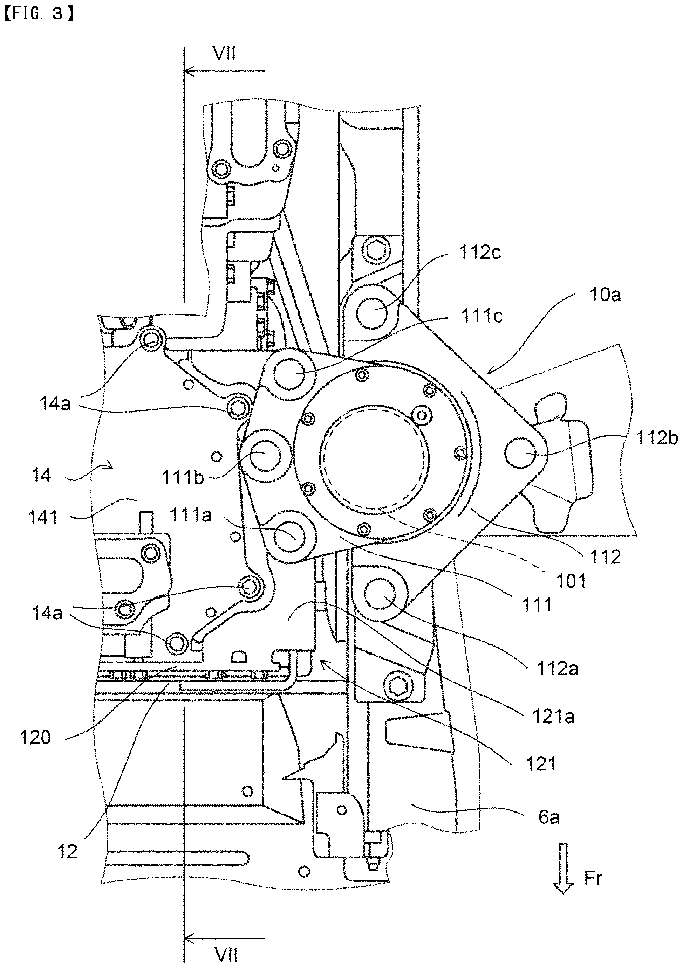

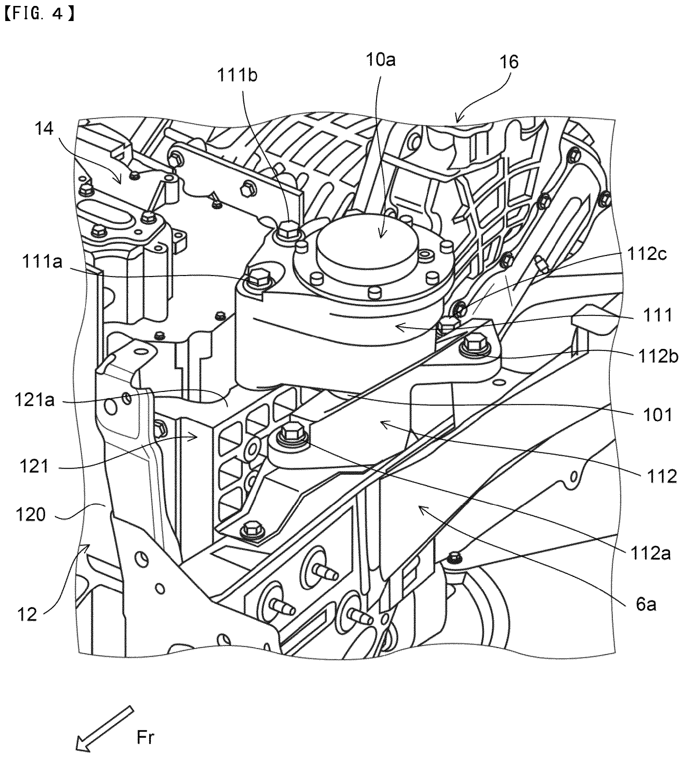

FIG. 3 is a view mainly illustrating the mount bracket 10a in FIG. 1. FIG. 4 is a perspective view mainly illustrating the mount bracket 10a.

As illustrated in FIG. 3, one end (upper end) of the mount bracket 10a is fastened to an upper surface 121a of the upright wall 121 formed in the motor housing 120 of the first rotary electric machine 12 of the drive unit 10. The other end (lower end) of the mount bracket 10a is fastened to an upper surface of the side member 6a.

As illustrated in FIG. 4, the mount bracket 10a is configured such that with a cylindrical elastic body 101 being sandwiched, a drive unit-side bracket 111 fixed to a drive unit 10 side is disposed on an upper side of the mount bracket 10a and a vehicle body-side bracket 112 fixed to a side member 6a side is disposed on a lower side of the mount bracket 10a.

The drive unit-side bracket 111 supports the elastic body 101 therein, and three bolt holes fastened to the upright wall 121 are formed on the drive unit 10 side. The bolt holes are fastened to the upright wall 121 by bolting to form a first fastening point (fastening points 111a, 111b, and 111c).

The vehicle body-side bracket 112 is formed in a substantially triangular shape in a plan view as illustrated in FIG. 3 so as to support the elastic body 101 on an upper surface of the vehicle body-side bracket 112, and bolt holes are formed at three positions of an apex of the triangular shape. The front and rear bolt holes in the vehicle front-rear direction are fastened to the side member 6a by bolting. The middle bolt hole between the front and rear bolt holes is fastened, by bolting, to a bracket extending from the side member 6a at a position higher than the front and rear bolt holes. The bolt hole of the vehicle body-side bracket 112 is fastened to the side member 6a by bolting to form a second fastening point (fastening points 112a, 112b, and 112c).

The mount bracket 10a suppresses transmission of vibration between the drive unit 10 and the side member 6a in the motor room 2 by interposing the elastic body 101 between the drive unit-side bracket 111 on an upper end side and the vehicle body-side bracket 112 on a lower end side.

As illustrated in FIG. 1, the mount bracket 10b is provided between the engine 15 and the side member 6b. The mount bracket 10b has an elastic body similarly to the mount bracket 10a, supports the engine 15 on the side member 6b in the motor room 2, and suppresses transmission of vibration therebetween. A torque rod (not illustrated) is provided in the vicinity of the center in the vehicle width direction below the drive unit 10. The torque rod supports the drive unit 10 in the motor room 2 while suppressing a reaction force caused by a drive torque of the drive unit 10.

Next, a case where a large load is input to the vehicle at the time of a vehicle collision or the like in the drive unit 10 configured in this manner will be described.

When a large load is input from the front of the vehicle at the time of a collision or the like, the side member may be deformed and interfere with the inverter unit. In such a case, the inverter housing may be damaged, and a problem may occur in the insulation property of the inverter unit.

In order to prevent such a problem, in the present embodiment, the occurrence of a problem in the insulation property of the inverter unit including the heavy electric component is suppressed by the following configuration even when a large load is input.

As illustrated in FIG. 4, the side member 6a is located to the left of the drive unit 10 in the vehicle width direction in the motor room 2. The upright wall 121 is disposed adjacent to (facing to) the side member 6a at an upper left portion of the first rotary electric machine 12 in the vehicle width direction. The upright wall 121 functions as a member for attaching the mount bracket 10a which is a mount member for supporting the drive unit 10 in the motor room 2, and also functions as a member for preventing, when the side member 6a is deformed, the deformed side member 6a from interfering with the inverter unit 14 as described below.

As illustrated in FIG. 3, the upright wall 121 is interposed between the inverter unit 14 disposed on the upper surface of the drive unit 10 and the side member 6a located on the outer side of the inverter unit 14 in the vehicle width direction. The upright wall 121 is formed integrally with the motor housing 120, and the motor housing 120 is a highly rigid structure for holding the stator 122 and the rotor 123 which are heavy objects. Therefore, even when a large load is input and the side member 6a is deformed toward the drive unit 10 at the time of a collision or the like, the side member 6a is prevented from interfering with the inverter unit 14 by the presence of the upright wall 121 having high rigidity.

Since the transmission 13 and the engine 15 having high rigidity and large size are present to the right of the inverter unit 14, the components of the motor room 2 do not interfere from the right of the inverter unit 14.

Next, a mounting structure of the drive unit 10 will be described.

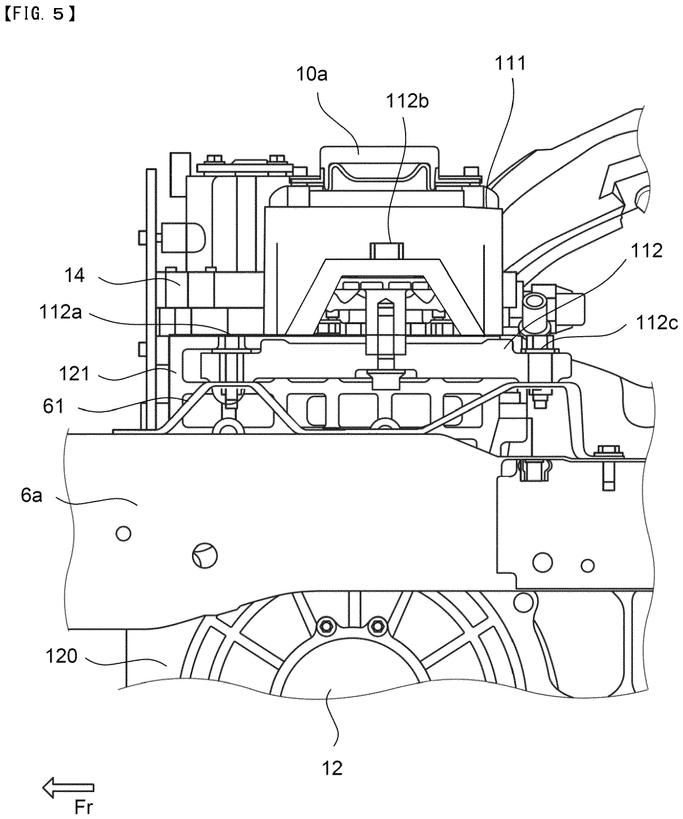

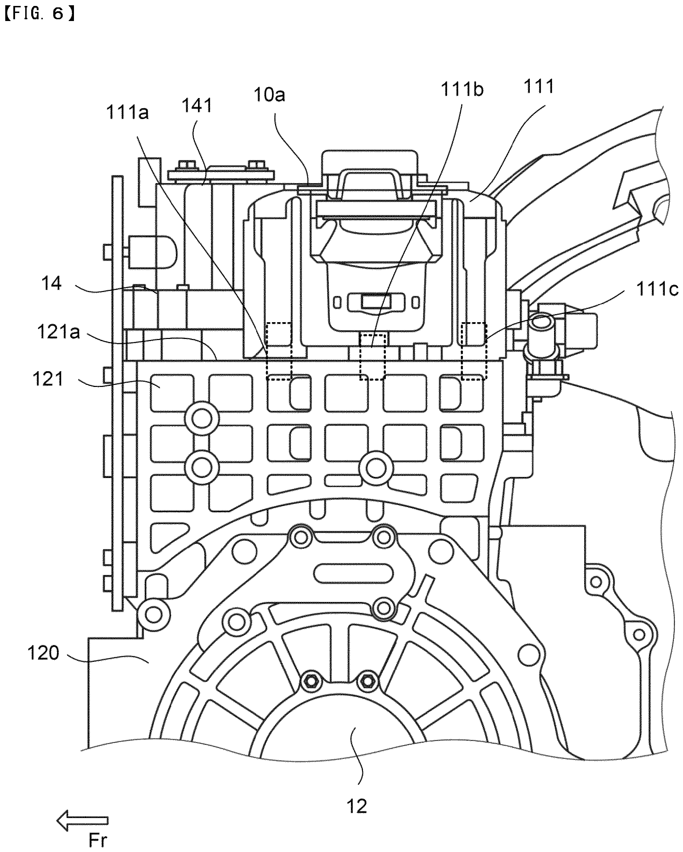

FIG. 5 is a view of the motor room 2 from a left side surface of the electric vehicle 1. FIG. 6 is a view of the drive unit 10 from the left side surface of the electric vehicle 1.

As illustrated in FIG. 5, the side member 6a is located on the outer side (front side in FIG. 5) of the drive unit 10, and a left side surface of the first rotary electric machine 12 of the drive unit 10 faces to the side member 6a.

A bracket 61 having a wave shape in an upper-lower direction is fixed to the upper surface of the side member 6a. The vehicle body-side bracket 112 of the mount bracket 10a is fastened to the upper surface of the bracket 61 by the two front-side and rear-side fastening points 112a and 112c. The fastening point 112b is fastened to a position separated upward from the upper surface of the side member 6a as illustrated in FIG. 4.

As illustrated in FIG. 6, the drive unit-side bracket 111 of the mount bracket 10a is fastened to the upright wall 121 of the first rotary electric machine 12 at three fastening points 111a, 111b, and 111c. The upper surface 121a of the upright wall 121 is located higher than the upper surface of the side member 6a.

In this manner, the upper surface 121a of the upright wall 121 is disposed at a position higher than the upper surface of the side member 6a, so that even when a large load is input and the side member 6a is deformed toward the drive unit 10, the side member 6a does not climb over and interfere with the inverter unit 14 located further back than the upright wall 121.

Next, an internal structure of the inverter unit 14 will be described.

FIG. 7 is a sectional view of the drive unit 10 taken along a line VII-VII in FIG. 3.

The inverter unit 14 includes the inverter housing 141 and the heavy electric component 142 such as a power module. The inverter housing 141 has a box shape with a bottom portion opened. The heavy electric component 142 is fixed to the inside of the inverter housing 141, and a part of the heavy electric component 142 protrudes downward from the bottom portion.

The heavy electric component 142 includes a three-phase bus bar 143 further extending downward. The three-phase bus bar 143 is electrically connected between the first rotary electric machine 12 and the heavy electric component 142.

The first rotary electric machine 12 is configured such that the stator 122 and the rotor 123 are accommodated in the motor housing 120. The stator 122 includes a winding, and the three-phase bus bar 143 is coupled to the winding. A recessed portion 125 is formed in the upper surface of the motor housing 120 to be recessed downward. The recessed portion 125 faces to the bottom portion of the inverter housing 141 of the inverter unit 14, and accommodates the heavy electric component 142 and the three-phase bus bar 143 protruding downward from the inverter housing 141.

With this configuration, in the inverter unit 14, the heavy electric component 142 and the three-phase bus bar 143 are accommodated in a space surrounded by the inverter housing 141 and the recessed portion 125 of the motor housing 120. The three-phase bus bar 143 is disposed below a fastening position between the mount bracket 10a and the upright wall 121, that is, the upper surface 121a of the upright wall 121.

More specifically, a position (indicated by A in FIG. 7) overlapping in the vehicle width direction when the three-phase bus bar 143 and the motor housing 120 are viewed from the left side of the vehicle and a position (indicated by B in FIG. 7) overlapping in the vehicle width direction when the three-phase bus bar 143 and the side member 6a are viewed from the left side of the vehicle overlap in the vehicle width direction.

The motor housing 120 is a highly rigid structure for holding the stator 122 and the rotor 123, which are heavy objects. Therefore, since the motor housing 120 having high rigidity is present around the three-phase bus bar 143 and the heavy electric component 142 to which a high voltage is applied, even when a large load is input and the side member 6a is deformed toward the drive unit 10, the side member 6a is prevented from interfering with the three-phase bus bar 143 and the heavy electric component 142. Furthermore, since the heavy electric component 142 and the three-phase bus bar 143 are accommodated in the recessed portion 125 of the motor housing 120 below the inverter housing 141 in the inverter unit 14, the size of the inverter unit 14 in a height direction can be suppressed, and the inverter unit 14 can be reduced in size.

As illustrated in FIG. 3, in mount bracket 10a, a front-rear interval between the front-side fastening point 112a and the rear-side fastening point 112c of the vehicle body-side bracket 112 is larger than an interval between the front-side fastening point 111a and the rear-side fastening point 111c of the drive unit-side bracket 111.

In this manner, by increasing a width in the front-rear direction of the fastening points at which the mount bracket 10a is fastened to the side member 6a, even when a large load is input, the side member 6a is less likely to bend toward the drive unit between the fastening point 112a and the fastening point 112c, and is folded at other position. That is, even when a large load is input, the side member 6a is more reliably prevented from interfering with the drive unit 10 side.

Further, as illustrated in FIG. 4, the position at which the vehicle body-side bracket 112 and the side member 6a are fastened is lower than the position at which the drive unit-side bracket 111 is fastened to the upright wall 121. At least one fastening point 112a of the vehicle body-side bracket 112 is located in front of the front-side fastening point 111a of the drive unit-side bracket 111 in the vehicle front-rear direction. The fastening points 112a and 112c between the mount bracket 10a and the side member 6a are set at low positions, and the fastening point 112b is disposed at a position higher than the fastening points 112a and 112c.

With such a configuration, when a large load is input and the side member 6a is deformed, at least one second fastening point (fastening points 112a, 112b, and 112c) is disposed in front of the first fastening point (fastening points 111a, 111b, and 111c), so that the second fastening point 112a is broken before the first fastening point, and the mount bracket 10a becomes movable with respect to the side member 6a. At this time, since the drive unit 10 and the mount bracket 10a are fixed at the first fastening point, the mount bracket 10a moves to be pulled obliquely backward and upward in the motor room 2. Accordingly, the drive unit 10 moves in a direction away from the deformed side member 6a, so that the side member 6a is more reliably prevented from interfering with the inverter unit 14 of the drive unit 10. Further, the mount bracket 10a moves to be pulled obliquely backward and upward in the motor room 2, so that the mount bracket 10a is prevented from interfering with the inverter unit 14 even when the first fastening point is broken.

As described above, the electric vehicle 1 according to the present embodiment includes the drive unit 10 including the first rotary electric machine 12 as a motor disposed in the motor room 2 of the electric vehicle 1 and the inverter unit 14 electrically connected to the first rotary electric machine 12, and the mount bracket 10a that supports the drive unit 10 in the motor room 2. The first rotary electric machine 12 includes the motor housing 120, and the inverter unit 14 is placed on an upper surface of the motor housing 120 and fixed to the motor housing 120 at the fixing point 14a disposed at an outer edge portion of the inverter unit 14. The motor housing 120 includes the upright wall 121 that is upright above the motor housing 120 on an outer side of the fixing point 14a of the inverter unit 14 in a vehicle width direction, and one end of the mount bracket 10a is fixed to the upper surface 121a of the upright wall 121.

With such a configuration, the upright wall 121 is provided on the outer side of the fixing point 14a of the inverter unit 14 in the vehicle width direction, and the mount bracket 10a is provided at an upper portion of the upright wall 121. Accordingly, when a large load is input at the time of a collision or the like, a component (for example, side member 6a) in the motor room 2 fastened to the other end of the mount bracket 10a is prevented from directly interfering with the inverter unit 14 from the outer side in the vehicle width direction, and it is possible to suppress occurrence of a problem in the insulation property of the inverter unit 14.

In the present embodiment, the electric vehicle 1 includes the side member 6a disposed lateral to the drive unit 10 along a front-rear direction of the vehicle, one end of the mount bracket 10a is fixed to the upper surface 121a of the upright wall 121, and the other end of the mount bracket 10a is fixed to the side member 6a located at an outer side of the upright wall 121 in the vehicle width direction.

With such a configuration, when a large load is input at the time of a collision or the like, the side member 6a located at the outer side of the drive unit 10 is prevented from directly interfering with the inverter unit 14 from the outer side in the vehicle width direction even when being deformed.

In the present embodiment, the inverter unit 14 and the first rotary electric machine 12 are electrically connected to each other via the three-phase bus bar 143, and the three-phase bus bar 143 is disposed below a second fastening point at which the mount bracket 10a is fastened to the upright wall 121 in an upper-lower direction.

With such a configuration, since the upright wall 121 having high rigidity is interposed between the three-phase bus bar 143 to which a high voltage current is applied and the side member 6a fastened to the mount bracket 10a, the side member 6a is prevented from climbing over the upright wall 121 and interfering with the three-phase bus bar 143.

In the present embodiment, since the motor housing 120 of the first rotary electric machine 12 having high rigidity is interposed between the three-phase bus bar 143 and the side member 6a in the vehicle width direction, the side member 6a interferes with the motor housing 120 and does not interfere with the three-phase bus bar 143.

In the present embodiment, the inverter unit 14 includes the inverter housing 141 and the heavy electric component 142, the heavy electric component 142 is accommodated in the inverter housing 141, the motor housing 120 has the recessed portion 125 recessed from an upper surface of the motor housing 120, and the heavy electric component 142 is accommodated in the recessed portion 125 below the inverter housing 141 such that a part of the heavy electric component 142 is disposed to protrude downward from a bottom portion of the inverter housing 141.

With such a configuration, since the periphery of the heavy electric component 142 is surrounded by the motor housing 120 having high rigidity, the side member 6a interferes with the motor housing 120 and does not interfere with the heavy electric component 142, and it is possible to reduce the size of the inverter unit 14 in the height direction.

In the present embodiment, the other end of the mount bracket 10a (vehicle body-side bracket 112) is fixed to the side member 6a by a plurality of second fastening points (fastening points 112a, 112b, and 112c) in the vehicle front-rear direction, the one end of the mount bracket 10a (drive unit-side bracket 111) is fastened to the upright wall 121 by a plurality of first fastening points (111a, 111b, and 111c) in the vehicle front-rear direction, and an interval in the front-rear direction of the first fastening points is larger than an interval in the front-rear direction of the second fastening points.

With such a configuration, the interval in the front-rear direction between the first fastening points of the mount bracket 10a with respect to the side member 6a is increased, so that even when a large load is input, the side member 6a is less likely to be bent toward the drive unit 10 on a side surface of the drive unit 10 at a portion where the mount bracket 10a is disposed, and the side member 6a is prevented from interfering with the drive unit 10.

In the present embodiment, the second fastening points are disposed at positions higher than the first fastening points in an upper-lower direction, and at least one of the second fastening points (fastening point 112a) is disposed in front of the first fastening points (fastening point 111a) in the vehicle front-rear direction.

With such a configuration, even when a large load is input, the mount bracket 10a moves to be pulled obliquely backward and upward from the electric vehicle 1, so that the side member 6a or the mount bracket 10a is prevented from interfering with the inverter unit 14.

Although the embodiment of the present invention has been described above, the configurations described in the above-described embodiment and modifications are merely examples of applications of the present invention, and are not intended to limit the technical scope of the invention.

In the above embodiment, the electric vehicle 1 in which the drive unit 10 includes the engine 15 and the second rotary electric machine 16 in addition to the first rotary electric machine 12 and the inverter unit 14 has been described, but the present invention is not limited thereto. The same configuration can be applied to an electric vehicle which does not have the engine 15 and the second rotary electric machine 16 and runs by a driving force of the first rotary electric machine 12.

## Claims

1. A drive unit for an electric vehicle, comprising:
a drive unit including a rotary electric machine disposed in a motor room of the electric vehicle and an inverter unit electrically connected to the rotary electric machine; and
a mount bracket configured to support the drive unit in the motor room, wherein
the rotary electric machine includes a motor housing,
the inverter unit is placed on an upper surface of the motor housing and fixed to the motor housing at a fixing point disposed at an outer edge portion of the inverter unit,
the motor housing includes an upright wall that is upright above the motor housing on an outer side of the fixing point of the inverter unit in a vehicle width direction, and
one end of the mount bracket is fixed to an upper surface of the upright wall.

2. The drive unit for an electric vehicle according to claim 1, wherein
the electric vehicle includes a side member disposed lateral to the drive unit along a front-rear direction of the vehicle, and
one end of the mount bracket is fastened to the upper surface of the upright wall, and the other end of the mount bracket is fastened to the side member located at an outer side of the upright wall in the vehicle width direction.

3. The drive unit for an electric vehicle according to claim 2, wherein
the inverter unit and the rotary electric machine are electrically connected to each other via a bus bar, and
the bus bar is disposed below, in an upper-lower direction, a fastening point at which the mount bracket is fastened to the upright wall.

4. The drive unit for an electric vehicle according to claim 3, wherein
the motor housing is interposed between the bus bar and the side member in the vehicle width direction.

5. The drive unit for an electric vehicle according to claim 4, wherein
the inverter unit includes an inverter housing and a heavy electric component, and the heavy electric component is accommodated in the inverter housing,
the motor housing has a recessed portion recessed in an upper surface of the motor housing, and
the heavy electric component is accommodated in the recessed portion below the inverter housing such that a part of the heavy electric component is disposed to protrude downward from a bottom portion of the inverter housing.

6. The drive unit for an electric vehicle according to claim 2, wherein
the other end of the mount bracket is fastened to the side member by a plurality of first fastening points in the vehicle front-rear direction,
the one end of the mount bracket is fastened to the upright wall by a plurality of second fastening points in the vehicle front-rear direction, and
an interval in the front-rear direction between the plurality of first fastening points on the side member is larger than an interval in the front-rear direction between the plurality of second fastening points on the upright wall.

7. The drive unit for an electric vehicle according to claim 6, wherein
the second fastening points are disposed at positions higher than the first fastening points in an upper-lower direction, and
at least one of the first fastening points is disposed in front of the second fastening points in the vehicle front-rear direction.
